# EUROPÄISCHE PATENTSCHRIFT

(11) **EP 2 900 514 B1**
(45) Veröffentlichungstag und Bekanntmachung des Hinweises auf die Patenterteilung: **12.12.2018**
(21) Anmeldenummer: 13756426.6
(22) Anmeldetag: 28.08.2013
(51) Int. Cl.: B60K 26/02, B60W 50/16

(54) **VERFAHREN UND STEUERGERÄT ZUM STEUERN EINES HAPTISCHEN FAHRPEDALS EINES KRAFTFAHRZEUGS MIT EINER SIMULIERTEN RASTENFUNKTION**
METHOD AND CONTROL UNIT FOR CONTROLLING A HAPTIC ACCELERATOR PEDAL OF A MOTOR VEHICLE HAVING A SIMULATED DETENT FUNCTION
PROCÉDÉ ET DISPOSITIF DE COMMANDE PERMETTANT DE COMMANDER UNE PÉDALE D'ACCÉLÉRATEUR HAPTIQUE D'UN VÉHICULE AUTOMOBILE PRÉSENTANT UNE FONCTION D'ENCLIQUETAGE SIMULÉE

(30) Priorität: 27.09.2012 DE 102012217677
(43) Veröffentlichungstag der Anmeldung: 05.08.2015
(73) Patentinhaber: Robert Bosch GmbH, 70442 Stuttgart (DE)
(72) Erfinder: SIEBER, Udo, 74321 Bietigheim (DE); RUETZEL, Felix, 71282 Hemmingen (DE)
(86) Internationale Anmeldenummer: PCT/EP2013/067765
(87) Internationale Veröffentlichungsnummer: WO 2014/048659

(56) Entgegenhaltungen:
- DE-A1- 4 302 500
- DE-A1- 19 922 338
- DE-A1-102007 011 739
- DE-A1-102011 013 045

## Beschreibung

### Gebiet der Erfindung

Die vorliegende Erfindung betrifft ein Verfahren sowie ein Steuergerät zum Steuern eines haptischen Fahrpedals in einem Kraftfahrzeug. Die Erfindung betrifft ferner ein Computerprogrammprodukt, das beim Ausführen auf einem programmierbaren Steuergerät das erfindungsgemäße Verfahren ausführen soll, sowie ein computerlesbares Medium, auf dem ein solches Computerprogrammprodukt gespeichert ist.

### Stand der Technik

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände oder Aufforderungen an den Fahrer, bestimmte Maßnahmen zu treffen, zu signalisieren, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Kraftfahrzeugen werden zusätzlich auch Möglichkeiten einer haptischen Rückmeldung an den Fahrer über das Fahrpedal des Fahrzeugs implementiert. Das Fahrpedal ist hierzu mit einem Aktuator ausgestattet, der es ermöglicht, das Fahrpedal gezielt mit einer Kraft zu beaufschlagen. Beispielsweise kann der Aktuator ab einer bestimmten Fahrpedallage als variabel einstellbarer Druckpunkt einem weiteren Niederdrücken des Fahrpedals gezielt entgegenwirken, um einem Fahrer so beispielsweise zu signalisieren, dass ein stärkeres Niederdrücken des Fahrpedals zu einer überproportionalen Erhöhung des Kraftstoffverbrauchs führen würde. Insbesondere kann bei einem Hybridfahrzeug dem Fahrer zum Beispiel signalisiert werden, dass bei einem weiteren Niederdrücken des Gaspedals der Antrieb des Fahrzeugs von einem Elektromotor auf einen kraftstoffbetriebenen Motor umgeschaltet wird oder letzterer dem Elektromotor zugeschaltet wird.

Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

DE 25 55 429 beschreibt ein System zur Erzeugung von taktilen bzw. haptisch wahrnehmbaren Signalen in einem Fahrzeug.

Aus der gattungsbildenden DE 10 2011 013 045 A1 sind ein Antriebs-System und ein Verfahren zur Steuerung eines Antriebs-Systems bekannt.

Aus der DE 10 2007 011 739 A1 ist ein Kraftfahrzeug bekannt, welches eine Einrichtung zur Vorgabe eines Fahrerwunsches aufweist, wobei die Einrichtung zur Erzeugung einer je nach Fahrbetrieb erhöhten Rückstellkraft ausgebildet ist.

### Offenbarung der Erfindung

Die vorliegende Erfindung ermöglicht in ihren Ausführungsformen ein vorteilhaftes Ansteuern eines haptischen Fahrpedals in einem Kraftfahrzeug. Insbesondere kann mithilfe der Erfindung ein haptisch wahrnehmbares Signal in dem Fahrpedal derart erzeugt werden, dass ein Fahrer zuverlässig und einfach haptisch erkennbar darüber informiert werden kann, dass bei einem weiteren Niederdrücken des Fahrpedals z.B. ein Betriebsmodus des Fahrzeugs geändert werden wird.

Es wird ein Verfahren zum Steuern eines haptischen Fahrpedals in einem Kraftfahrzeug vorgeschlagen. Das Fahrpedal soll innerhalb eines Gesamtverlagerungsbereichs zwischen einer Ruheposition und einer maximal betätigten Position verlagerbar sein. Eine beispielsweise von einer Feder bewirkte, auf das Fahrpedal wirkende Gegenkraft soll proportional zu einem Verlagerungsweg des Fahrpedals innerhalb des Gesamtverlagerungsbereichs sein. Das Fahrpedal kann mittels eines Aktuators innerhalb eines so genannten Teilverlagerungsbereichs, das heißt, an vorgegebenen Positionen beziehungsweise Positionsbereichen oder aktuell zu bestimmenden Positionen beziehungsweise Positionsbereichen, zur Erzeugung eines von einem Fahrer haptisch wahrnehmbaren Signals mit einer zusätzlichen Gegenkraft beaufschlagt werden. Diese Gegenkraft soll innerhalb des Verlagerungsbereichs mit zunehmendem Verlagerungsweg des Fahrpedals bis auf einen Maximalkraftwert ansteigen. Das Steuerungsverfahren zeichnet sich dadurch aus, dass bei einem Niederdrücken des Fahrpedals durch einen Fahrer die vom Aktuator erzeugte zusätzliche Gegenkraft vor Erreichen des Maximalkraftwerts innerhalb eines so genannten Rastenteilbereichs des Teilverlagerungsbereichs reduziert wird, um dem Fahrer den bevorstehenden Maximalkraftwert haptisch zu signalisieren.

Ausführungsformen der Erfindung können unter anderem als auf den folgenden Erkenntnissen und Ideen basierend angesehen werden:
Bei haptischen Fahrpedalen kann beispielsweise ein virtueller Druckpunkt an einer beliebig vorgebbaren Position innerhalb des Gesamtverlagerungsbereichs des Fahrpedals erzeugt werden, in dem mithilfe des Aktuators im Bereich dieser Position zusätzlich zu der ohnehin rückstellend wirkenden Gegenkraft lokal eine zusätzliche Gegenkraft auf das Fahrpedal bewirkt wird. Diese zusätzliche Gegenkraft weist eine bestimmte Profilform auf, bei der die zusätzliche Gegenkraft abhängig von der Position des Fahrpedals entlang des Verfahrwegs eingestellt wird, und nimmt bei herkömmlichen haptischen Fahrpedalen beim Niederdrücken des Fahrpedals kontinuierlich zu, bis sie einen Maximalkraftwert erreicht, und nimmt danach entweder wieder ab oder bleibt konstant.

Die Position, an der der Maximalkraftwert auftritt, kann dabei beispielsweise derart gewählt sein, dass sich bei einem Niederdrücken des Fahrpedals durch den Fahrer über diese Position hinaus ein Betriebsmodus des Kraftfahrzeugs ändert. Beispielsweise kann bei einem Hybrid-Kraftfahrzeug bei einem Übertreten der Position des Maximalkraftwerts ein Betriebsmodus von einem rein elektrischen Antrieb auf einen kraftstoffbetriebenen Antrieb oder eine Kombination aus elektrischem und kraftstoffbetriebenem Antrieb umgeschaltet werden, da davon ausgegangen werden kann, dass der Fahrer durch das starke Niedertreten des Fahrpedals eine verstärkte Beschleunigung des Fahrzeugs erreichen möchte, die allein durch den elektrischen Antrieb nicht erreicht werden kann.

Bei den oben beschriebenen Profilformen der von dem Aktuator bewirkten zusätzlichen Gegenkraft konnte jedoch das Problem beobachtet werden, dass ein Erreichen des Maximalkraftwerts von einem Fahrer erst bemerkt wurde, wenn die Position, an der der Maximalkraftwert auftritt, bereits überschritten war. Insbesondere bei Kraftprofilen, bei denen die zusätzlich erzeugte Gegenkraft nach Erreichen des Maximalkraftwerts wieder abnimmt, wurde außerdem beobachtet, dass der Fuß des Fahrers nach Überschreiten des Maximalkraftwerts das Fahrpedal sogar noch schneller als zuvor niedertritt, was zu einem unerwünscht starken Überschreiten der von dem Maximalkraftwert zum Beispiel anzudeutenden Umschaltposition führen kann.

Es wird daher vorgeschlagen, das von dem Aktuator innerhalb des Teilverlagerungsbereichs erzeugte Profil der zusätzlichen Gegenkraft derart abzuändern, dass die zusätzliche Gegenkraft bereits vor Erreichen des Maximalkraftwerts, das heißt, innerhalb eines so genannten Rastenteilbereichs des Teilverlagerungsbereichs, spürbar reduziert wird. Eine solche innerhalb des Rastenteilbereichs signifikant reduzierte zusätzliche Gegenkraft kann von dem Fahrer wie ein Einrasten des Fahrpedals kurz vor Erreichen des Maximalkraftwerts empfunden werden. Ähnlich wie bei einer Raste, spürt der Fahrer, dass aufgrund der lokal reduzierten Erzeugung der zusätzlichen Gegenkraft innerhalb des Rastenteilbereichs ein geringfügiges Erhöhen oder Reduzieren des vom Fahrer ausgeübten Drucks auf das Fahrpedal kaum zu einer Änderung der Position des Fahrpedals führt. Durch ein starkes Erhöhen oder Verringern des vom Fahrer auf das Fahrpedal ausgeübten Drucks kann der Rastenteilbereich jedoch verlassen werden. Auf diese Weise kann dem Fahrer signalisiert werden, dass ein Erreichen der Position mit dem Maximalkraftwert kurz bevorsteht und dass ein weiteres Niederdrücken des Fahrpedals zu einer Überschreitung dieser Position und damit beispielsweise zu einer Änderung des Betriebsmodus des Kraftfahrzeugs führen wird.

Der Rastenteilbereich kann im Vergleich zum Teilverlagerungsbereich klein sein und beispielsweise nur zwischen 3% und 20% des Teilverlagerungsbereichs ausmachen. Der Rastenteilbereich sollte dabei breit genug sein, dass das vom Fahrer zu fühlende Einrasten des Fahrpedals ausreichend deutlich haptisch wahrgenommen werden kann. Andererseits sollte der Rastenteilbereich nicht zu breit sein, um z.B. eine Verfälschung des Kraftprofils der von dem Aktuator zusätzlich erzeugten Gegenkraft zu vermeiden, da beispielsweise ein stark nicht-lineares Kraftverhalten des Fahrpedals von einem Fahrer als störend wahrgenommen werden könnte.

Die von dem Aktuator erzeugte zusätzliche Gegenkraft kann innerhalb des Rastenteilbereichs um zwischen 5% und 70% des Maximalkraftwerts, vorzugsweise zwischen 15% und 50% des Maximalkraftwerts, reduziert werden. Die Reduzierung der zusätzlich erzeugten Gegenkraft sollte innerhalb des Rastenteilbereichs ausreichend stark sein, damit ein Fahrer ein deutlich wahrnehmbares Einrasten des Fahrpedals empfindet. Andererseits sollte die Reduzierung der zusätzlich erzeugten Gegenkraft nicht zu stark sein, damit der Fahrer durch ein Ändern der von ihm auf das Fahrpedal bewirkten Kraft ein Lösen des Fahrpedals aus dem im Rastenteilbereich eingerasteten Zustand heraus ohne übermäßige Änderung der ausgeübten Kraft bewirken kann.

Die vom Aktuator abhängig vom Verlagerungsweg des Fahrpedals zusätzlich erzeugte Gegenkraft soll vorzugsweise innerhalb des Rastenteilbereichs mit einer höheren Änderungsrate reduziert werden, als die außerhalb des Rastenteilbereichs, das heißt, innerhalb des umgebenden Bereichs des Teilverlagerungsbereichs, zunimmt. Mit anderen Worten soll sich das Fahrpedal beim Niedertreten durch den Fahrer zu Beginn des Teilverlagerungsbereichs zunächst entgegen einer verhältnismäßig schwach zunehmenden zusätzlich erzeugten Gegenkraft bewegen lassen. Die vom Aktuator zusätzlich bewirkte Gegenkraft kann dabei beispielsweise direkt proportional zum Verlagerungsweg linear zunehmen. Die zusätzlich erzeugte Gegenkraft nimmt dabei kontinuierlich zu, bis der Beginn des Rastenteilbereichs erreicht ist. Ab dort nimmt die zusätzlich erzeugte Gegenkraft rapide ab, das heißt, mit einer Änderungsrate, die betragsmäßig wesentlich größer ist als bei dem vorhergehenden Zunehmen der Gegenkraft, aber mit entgegengesetztem Vorzeichen. Die zusätzlich erzeugte Gegenkraft nimmt jedoch nicht bis auf Null, sondern nur bis zu einem Minimalwert ab und steigt von dort an wieder rapide an, vorzugsweise bis zu einem Wert, der einem an dieser Stelle weitergeführten linearen Kraftprofil der zusätzlich erzeugten Gegenkraft entspricht. Von dieser Position aus nimmt die zusätzlich erzeugte Gegenkraft weiter linear zu, bis der Maximalkraftwert erreicht ist. Bei einem weiteren Niederdrücken des Fahrpedals nimmt die zusätzlich erzeugte Gegenkraft entweder sukzessive ab oder bleibt konstant.

Die starke Veränderung der zusätzlich erzeugten Gegenkraft innerhalb des Rastenteilbereichs kann die deutliche Wahrnehmbarkeit, mit der der Fahrer eine Verrastung des Fahrpedals spüren kann, verbessern.

Der Rastenteilbereich ist erfindungsgemäss nahe der Position des Maximalkraftwerts und beabstandet zu dieser. "Nahe" soll in diesem Zusammenhang bedeuten, dass der Rastenteilbereich zumindest näher zu dem Maximalkraftwert als zu einem Anfang des Teilverlagerungsbereichs angeordnet ist. Vorzugsweise ist der Rastenteilbereich innerhalb eines Verlagerungsweges zwischen dem Anfang des Teilverlagerungsbereichs und der Position des Maximalkraftwerts in dem dieser Maximalkraftwertposition nächstliegenden Drittel, vorzugsweise Viertel, angeordnet. Dadurch, dass der Rastenteilbereich möglichst nahe zu der Position des Maximalkraftwerts aber zu dieser beabstandet angeordnet ist, kann der Fahrer die hierdurch bewirkte empfundenen Verrastung des Fahrpedals ausreichend rechtzeitig erspüren, bevor das Fahrpedal über die Position des Maximalkraftwerts hinaus niedergedrückt und damit ein geänderter Betriebsmodus des Kraftfahrzeugs bewirkt wird.

Die Bewirkung der Reduzierung der vom Aktuator erzeugten zusätzlichen Gegenkraft innerhalb des Rastenteilbereichs kann ein- und abschaltbar sein. Sofern beispielsweise in bestimmten Fahrsituationen erkannt wird, dass das Bewirken einer empfundenen Verrastung negativ sein kann und beispielsweise von einem Fahrer als störend wahrgenommen würde, kann die entsprechende Funktionalität des haptischen Fahrpedals somit gezielt zeitweise abgeschaltet werden.

Die oben beschriebenen Ausführungsformen von erfindungsgemäßen Verfahren und die damit erreichbaren Funktionalitäten und Vorteile können durch ein in einem Fahrzeug vorgesehenes Steuergerät zum Steuern des haptischen Fahrpedals implementiert werden.

Das Steuergerät kann dabei dazu ausgelegt sein, über geeignete Schnittstellen Steuersignale an einen in dem Aktuator enthaltenen Antriebsmotor auszugeben. Außerdem kann das Steuergerät Schnittstellen aufweisen, um beispielsweise von geeigneten Sensoren Informationen über eine aktuelle Position des Fahrpedals und/oder auf das Fahrpedal ausgeübte Kräfte empfangen zu können. Weiterhin können Schnittstellen vorgesehen sein, um beispielsweise Einflussparameter einlesen zu können, die für eine Entscheidung über eine Bewirkung einer empfundenen Verrastung relevant sein können. Beispielsweise kann eine Schnittstelle hin zu einem Motorsteuergerät vorgesehen sein, mit Hilfe derer erkannt werden kann, in welchem Betriebszustand sich der Motor befindet.

Das Steuergerät kann das vorgeschlagene Steuerverfahren sowie etwaige Informationsauswertungen von Sensorsignalen in Hardware und/oder in Software implementieren. Es kann vorteilhaft sein, ein programmierbares Steuergerät für die Ausführung des oben beschriebenen Verfahrens zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, einem ROM, einem EPROM oder ähnlichem gespeichert sein. Um die von dem Aktuator einzunehmende Anordnung korrekt ansteuern zu können, kann neben der Verarbeitung weiterer Sensordaten auch in einer Datenbank oder in Form von Kennlinien gespeicherte Information über ein von dem Aktuator durchgeführtes Reaktionsverhalten auf bestimmte Steuerungssignale herangezogen werden.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten gelangen zu können.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
- Figur 1: zeigt ein Kraftfahrzeug mit einem Steuergerät zum Ausführen eines Verfahrens gemäß einer Ausführungsform der vorliegenden Erfindung;
- Figur 2(a), 3(a): zeigen Gegenkraftprofile von herkömmlichen haptischen Fahrpedalen.
- Figur 2(b), 3(b): zeigen jeweils ein Gegenkraftprofil, wie es für ein haptisches Fahrpedal gemäß Ausführungsformen der Erfindung erzeugt wird.
- Figur 2(c), 3(c): zeigen jeweils ein Profil einer zusätzlich durch den Aktuator erzeugten Gegenkraft, wie es für ein haptisches Fahrpedal gemäß Ausführungsformen der Erfindung erzeugt wird.

Die Figuren sind lediglich schematisch und nicht maßstabsgetreu.

### Ausführungsformen der Erfindung

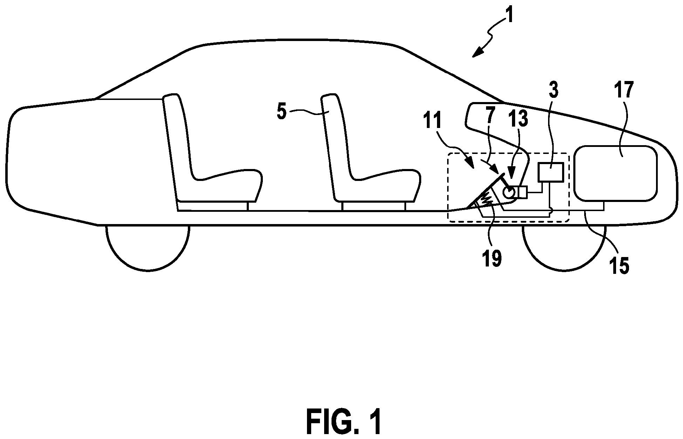

Figur 1 zeigt eine Schnittansicht eines Fahrzeugs 1 mit einem haptischen Fahrpedal 11. Durch Niederdrücken des Fahrpedals kann ein auf einem Sitz 5 sitzender Fahrer einen Motor 17 des Fahrzeugs 1 über eine Verbindungsleitung 15 oder eine mit einem Motorsteuergerät verbundene Leitung (nicht dargestellt) zum Beschleunigen des Fahrzeugs veranlassen. Der Fahrer muss hierzu das Fahrpedal 11 in Richtung des Pfeils 7 niederdrücken, wodurch sich das Fahrpedal 11, ausgehend von einer Ruheposition entlang eines Verlagerungsbereichs hin zu einer maximal betätigten Position, verlagern lässt. Eine Feder 19 spannt das Fahrpedal mit einer Gegenkraft entgegen der Betätigungsrichtung 7 hin zu der Ruheposition vor.

Das Fahrpedal 11 ist als haptisches Fahrpedal ausgestaltet. Hierzu verfügt das Fahrpedal 11 über einen Aktuator 13, mit Hilfe dessen das Fahrpedal 11 in eine gewünschte Richtung entgegen der Betätigungsrichtung 7 bewegt bzw. in diese mit einer zusätzlichen Gegenkraft beaufschlagt werden kann. Der Aktuator 13 kann beispielsweise eine zusätzliche Gegenkraft auf das Fahrpedal 11 ausüben, die ein weiteres Niederdrücken des Fahrpedals 11 erschweren kann und somit von einem Fahrer als Druckpunkt beim Betätigen des Fahrpedals 11 wahrgenommen werden kann.

Der Aktuator 13 wird von einem Steuergerät 3 angesteuert. Das Steuergerät 3 erkennt, wenn einem Fahrer über das Pedal 11 ein haptisch wahrnehmbares Signal übermittelt werden soll, um ihn beispielsweise auf die Möglichkeit einer kraftstoffsparenden Fahrweise oder eine Gefahrensituation hinzuweisen. Insbesondere erkennt das Steuergerät 3, in welchem Betriebsmodus sich das Fahrzeug aktuell befindet und unter welchen Bedingungen der Betriebsmodus geändert werden sollte.

Beispielsweise erkennt das Steuergerät 3, ob ein Hybrid-Kraftfahrzeug aktuell mit einem Elektromotor oder mit einem kraftstoffbetriebenen Motor oder einer Kombination dieser Motoren angetrieben wird. Das Steuergerät 3 kann auch anhand vorab ermittelter Daten und / oder aktuell gemessener Daten erkennen, unter welchen Bedingungen ein solcher Betriebsmodus geändert werden sollte. Beispielsweise kann das Steuergerät 3 erkennen, wenn das Fahrpedal 11 vom Fahrer sehr stark niedergedrückt wird und daraus einen starken Beschleunigungswunsch schlussfolgern und daraufhin einem Elektromotor eines Hybrid-Kraftfahrzeugs zusätzlich den kraftstoffbetriebenen Motor hinzuschalten.

Um dem Fahrer zu signalisieren, dass ein weiteres Niederdrücken des Fahrpedals 11 beispielsweise einen Beschleunigungswunsch angibt, der allein mit dem Elektromotor nicht mehr zu erfüllen ist und somit der kraftstoffbetriebene Motor hinzugeschaltet werden müsste, kann das Steuergerät 3 das haptische Fahrpedal 11 derart ansteuern, dass ergänzend zu der von der Feder 19 bewirkten linear zunehmenden Gegenkraft eine von dem Aktuator 13 bewirkte zusätzliche Gegenkraft erzeugt wird, die vom Fahrer haptisch als virtueller Druckpunkt wahrgenommen werden kann.

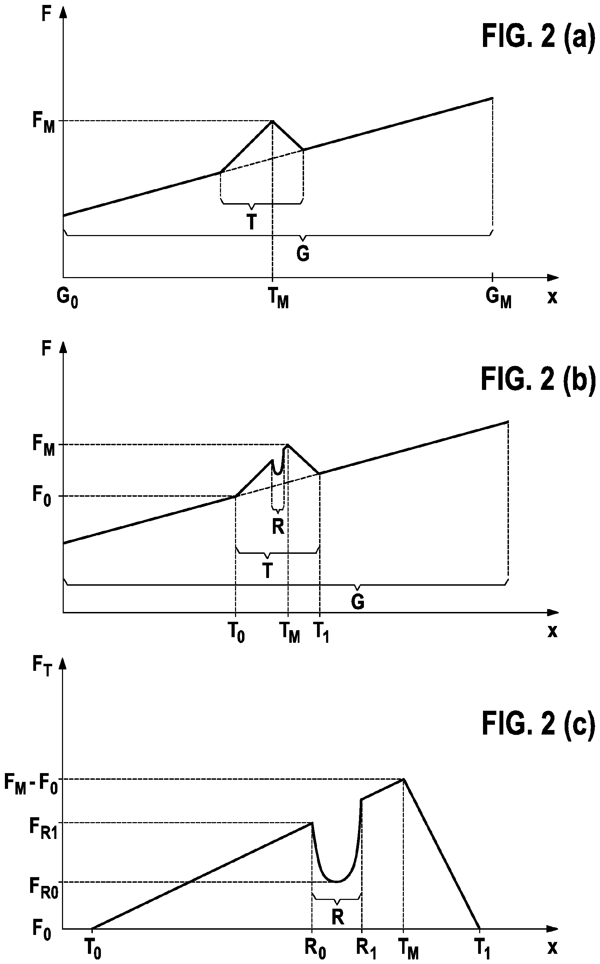

In Figur 2 (a) ist ein Verlauf einer Gegenkraft F abhängig von der Position x des Fahrpedals innerhalb des Gesamtverlagerungsbereichs G dargestellt. Im überwiegenden Anteil des Gesamtverlagerungsbereichs G nimmt die auf das Fahrpedal wirkende Gegenkraft F linear mit einer verhältnismäßig geringen Änderungsrate zu. In einem Teilverlagerungsbereich T, innerhalb dessen der haptisch wahrnehmbare virtuelle Druckpunkt erzeugt werden soll, wird mithilfe des Aktuators des Fahrpedals eine zusätzliche Gegenkraft erzeugt, so dass die gesamte Gegenkraft F mit einer größeren Änderungsrate zunimmt, bis ein Maximalkraftwert F_{M} bei einer Position T_{M} des Fahrpedals erreicht ist. Wird das Fahrpedal über die Position T_{M} weiter niedergedrückt, verringert sich die vom Aktuator zusätzlich erzeugte Gegenkraft wieder bis auf Null, so dass außerhalb des Teilverlagerungsbereichs T das Kraftprofil so weitergeführt wird, wie es von der Rückstellfeder 19 bewirkt wird.

Da bei dem in Figur 2 (a) dargestellten herkömmlichen Kraftprofil die Pedalposition T_{M} von einem Fahrer leicht "übertreten" versehentlich werden kann, da er kaum vorhersehen kann, wann der Maximalkraftwert F_{M} erreicht sein wird, wird vorgeschlagen, kurz vor dem Erreichen der Pedalposition T_{M} die von dem Aktuator zusätzlich erzeugte Gegenkraft innerhalb eines so genannten Rastenteilbereichs R lokal zu verringern, wie dies in den Figuren 2 (b) und 2 (c) dargestellt ist. In Figur 2 (b) ist dabei die gesamte auf das Fahrpedal wirkende Gegenkraft F dargestellt, wohingegen in der Figur 2 (c) lediglich die von dem Aktuator innerhalb des Teilverlagerungsbereichs T zusätzlich bewirkte Gegenkraft F_{T} in vergrößerter Darstellung gezeigt ist.

Bei den dargestellten Gegenkraftprofilen ist nahe der Position T_{M}, an der der Maximalkraftwert F_{M} erreicht wird, der Rastenteilbereich R als lokale Einbuchtung in dem ansonsten linearen Kraftprofil dargestellt. Die Breite (R₁ - R₀) des Rastenteilbereichs R macht dabei lediglich einen geringen Anteil von beispielsweise 10% bis 20% der Breite (T₁ - T₀) des Teilverlagerungsbereichs T aus. Eine maximale Tiefe (F_{R1} - F_{R0}) der Vertiefung in dem Kraftprofil innerhalb des Rastenteilbereichs, das heißt, eine Reduzierung der von dem Aktuator innerhalb des Rastenteilbereichs erzeugten Gegenkraft, beträgt etwa 15% bis 50% des Maximalkraftwerts F_{M}- F₀.

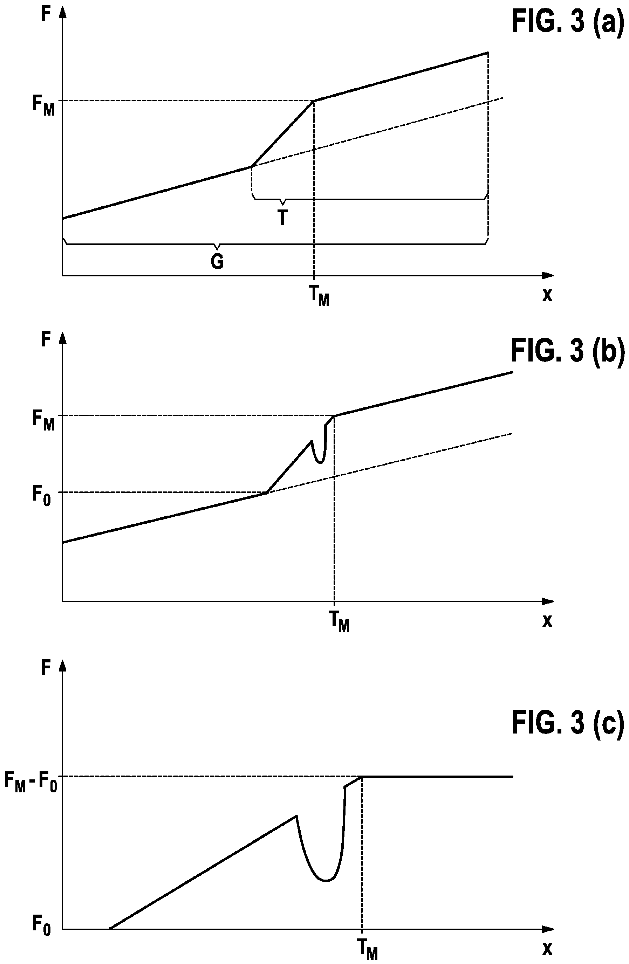

In Figur 3 (a) ist ein alternatives Kraftprofil für ein haptisches Fahrpedal veranschaulicht. Zur Bewirkung eines virtuellen Druckpunkts wird hierbei innerhalb eines Teilverlagerungsbereichs T von einem Aktuator eine zusätzliche Gegenkraft F_{T} erzeugt, die bis zu einem Maximalkraftwert F_{M} - F₀ ansteigt und dann konstant bleibt. In den Figuren 3 (b) und 3 (c) sind wiederum erfindungsgemäße Modifikationen an einem solchen Kraftprofil dargestellt.

Durch ein Ansteuern eines haptischen Fahrpedals in Übereinstimmung mit dem hierin beschriebenen Steuerverfahren, insbesondere mit den zuvor beschriebenen Kraftprofilen, kann einem Fahrer durch eine empfundene Verrastung des Fahrpedals rechtzeitig ein bevorstehendes Kraftmaximum innerhalb einer vom Aktuator erzeugten Gegenkraftrampe kommuniziert werden und auf diese Weise dem Fahrer die bewusste Entscheidung erlaubt werden, die angedeutete Barriere gezielt zu übertreten oder nicht.

## Patentansprüche

1. Verfahren zum Steuern eines haptischen Fahrpedals (11) in einem Kraftfahrzeug (3),
wobei das Fahrpedal (11) innerhalb eines Gesamtverlagerungsbereichs (G) zwischen einer Ruheposition (Go) und einer maximal betätigten Position (G_{M}) verlagerbar ist, wobei eine auf das Fahrpedal (11) wirkende Gegenkraft (F) proportional zu einem Verlagerungsweg (x) des Fahrpedals (11) ist, und wobei das Fahrpedal (11) mittels eines Aktuators (13) innerhalb eines Teilverlagerungsbereichs (T) zur Erzeugung eines haptisch wahrnehmbaren Signals mit einer zusätzlichen Gegenkraft (F_{T}) beaufschlagt wird, welche innerhalb des Teilverlagerungsbereichs (T) mit zunehmendem Verlagerungsweg des Fahrpedals (11) bis auf einen Maximalkraftwert (F_{M}- F₀) ansteigt,
wobei bei einem Niederdrücken des Fahrpedals (11) durch einen Fahrer die vom Aktuator (13) erzeugte zusätzliche Gegenkraft (F_{T}) vor Erreichen des Maximalkraftwerts (F_{M} - F₀) innerhalb eines Rastenteilbereichs (R) des Teilverlagerungsbereichs (T) reduziert wird, um dem Fahrer den bevorstehenden Maximalkraftwert (F_{M}) haptisch zu signalisieren **dadurch gekennzeichnet, dass**
der Rastenteilbereich (R) nahe der Position (T_{M}) des Maximalkraftwerts (F_{M}-F₀) und beabstandet zu dieser angeordnet ist.

2. Verfahren nach Anspruch 1, wobei die vom Aktuator (13) erzeugte zusätzliche Gegenkraft (F_{T}) innerhalb des Rastenteilbereichs (R) um zwischen 5 und 70 % des Maximalkraftwertes (F_{M}- F₀) reduziert wird.

3. Verfahren nach Anspruch 1 oder 2, wobei der Rastenteilbereich (R) zwischen 3% und 20% des Teilverlagerungsbereichs (T) ausmacht.

4. Verfahren einem der Ansprüche 1 bis 3, wobei die vom Aktuator (13) abhängig vom Verlagerungsweg des Fahrpedals (11) erzeugte zusätzliche Gegenkraft (F_{T}) innerhalb des Rastenteilbereichs (R) mit einer höheren Änderungsrate reduziert wird als sie außerhalb des Rastenteilbereichs (R) zunimmt.

5. Verfahren nach einem der Ansprüche 1 bis 4, wobei die Bewirkung der Reduzierung der vom Aktuator (13) erzeugten zusätzlichen Gegenkraft (F_{T}) innerhalb des Rastenteilbereichs (R) ein- und abschaltbar ist.

6. Verfahren nach einem der Ansprüche 1 bis 5, wobei durch Niederdrücken des Fahrpedals (11) durch einen Fahrer über die Position (T_{M}) hinaus, an der die Gegenkraft mit dem Maximalkraftwert (F_{M} - F₀) erzeugt wird, ein Betriebsmodus des Kraftfahrzeugs geändert wird.

7. Steuergerät (3) zum Steuern eines haptischen Fahrpedals (11) in einem Kraftfahrzeug (1), wobei das Steuergerät (3) dazu ausgelegt ist, ein Verfahren gemäß einem der Ansprüche 1 bis 6 durchzuführen.

8. Computerprogrammprodukt, welches computerlesbare Anweisungen aufweist, die ein programmierbares Steuergerät (3) dazu anweisen, ein Verfahren gemäß einem der Ansprüche 1 bis 6 durchzuführen.

9. Computerlesbares Medium mit einem darauf gespeicherten Computerprogrammprodukt gemäß Anspruch 8.

## Claims

1. Method for controlling a haptic accelerator pedal (11) in a motor vehicle (3),
wherein the accelerator pedal (11) can be moved within a total travel range (G), between a position of rest (G₀) and a position (G_{M}) of maximum activation, wherein an opposing force (F) which acts on the accelerator pedal (11) is proportional to a travel distance (x) of the accelerator pedal (11), and wherein an additional opposing force (F_{T}) is applied to the accelerator pedal (11) by means of an actuator (13) within a partial travel range (T) in order to generate a haptically perceivable signal, which opposing force (F_{T}) becomes larger within the partial travel range (T) up to a maximum force value (F_{M}-F₀) as the travel distance of the accelerator pedal (11) increases,
wherein when the accelerator pedal (11) is depressed by a driver the additional opposing force (F_{T}) which is generated by the actuator (13) is reduced within a detent partial range (R) of the partial travel range (T), before the maximum force value (F_{M}-F₀) is reached, in order to signal the imminent maximum force value (F_{M}) haptically to the driver,
**characterized**
**in that** the detent partial range (R) is arranged near to the position (T_{M}) of the maximum force value (F_{M}-F₀) and spaced apart therefrom.

2. Method according to Claim 1, wherein the additional opposing force (F_{T}) which is generated by the actuator (13) is reduced within the detent partial range (R) by between 5 and 70% of the maximum force value (F_{M}-F₀) .

3. Method according to Claim 1 or 2, wherein the detent partial range (R) makes up between 3% and 20% of the partial travel range (T).

4. Method according to one of Claims 1 to 3, wherein the additional opposing force (F_{T}) which is generated by the actuator (13) as a function of the travel distance of the accelerator pedal (11) is reduced within the detent partial range (R) with a higher rate of change than it increases outside the detent partial range (R).

5. Method according to one of Claims 1 to 4, wherein the effect of the reduction in the additional opposing force (F_{T}) which is generated by the actuator (13) within the detent partial range (R) can be switched on and off.

6. Method according to one of Claims 1 to 5, wherein an operating mode of the motor vehicle is changed by the accelerator pedal (11) being depressed by a driver beyond the position (T_{M}) at which the opposing force is generated with the maximum force value (F_{M}-F₀).

7. Control device (3) for controlling a haptic accelerator pedal (11) in a motor vehicle (1), wherein the control device (3) is configured to carry out a method according to one of Claims 1 to 6.

8. Computer program product which has computer-readable instructions which instruct a programmable control device (3) to carry out a method according to one of Claims 1 to 6.

9. Computer-readable medium having a computer program product stored thereon according to Claim 8.

## Revendications

1. Procédé pour commander une pédale d'accélérateur (11) haptique dans un véhicule automobile (3),
dans lequel la pédale d'accélérateur (11) peut être déplacée à l'intérieur d'une zone de déplacement totale (G) entre une position de repos (Go) et une position d'actionnement maximal (G_{M}), dans lequel une force opposée (F) qui agit sur la pédale d'accélérateur (11) est proportionnelle à une course de déplacement (x) de la pédale d'accélérateur (11) et dans lequel la pédale d'accélérateur (11) est sollicitée au moyen d'un actionneur (13) à l'intérieur d'une zone de déplacement partielle (T), en vue de générer un signal perceptible de manière haptique, avec une force opposée supplémentaire (F_{T}) qui augmente à l'intérieur de la zone de déplacement partielle (T) jusqu'à une valeur de force maximale (F_{M}-F₀) à mesure que la course de déplacement de la pédale d'accélérateur (11) augmente,
procédé dans lequel, lors d'un enfoncement de la pédale d'accélérateur (11) par un conducteur, la force opposée supplémentaire (F_{T}) générée par l'actionneur (13) est réduite avant d'atteindre la valeur de force maximale (F_{M}-F₀) à l'intérieur d'une zone partielle d'encliquetage (R) de la zone de déplacement partielle (T) afin de signaler de manière haptique au conducteur la valeur de force maximale (F_{M}) prochaine
**caractérisé en ce que**
la zone partielle d'encliquetage (R) se trouve à proximité de la position (T_{M}) de la valeur de force maximale (F_{M}-F₀) et est espacée de celle-ci.

2. Procédé selon la revendication 1, dans lequel la force opposée supplémentaire (F_{T}) générée par l'actionneur (13) est réduite à l'intérieur de la zone partielle d'encliquetage (R) d'entre 5 et 70 % de la valeur de force maximale (F_{M}-F₀).

3. Procédé selon la revendication 1 ou 2, dans lequel la zone partielle d'encliquetage (R) représente entre 3 % et 20 % de la zone de déplacement partielle (T) .

4. Procédé selon l'une des revendications 1 à 3, dans lequel la force opposée supplémentaire (F_{T}) générée par l'actionneur (13) en fonction de la course de déplacement de la pédale d'accélérateur (11) est réduite à l'intérieur de la zone partielle d'encliquetage (R) avec un taux de variation plus élevé qu'elle augmente en-dehors de la zone partielle d'encliquetage (R).

5. Procédé selon l'une des revendications 1 à 4, dans lequel l'application de la réduction de la force opposée supplémentaire (F_{T}) générée par l'actionneur (13) à l'intérieur de la zone partielle d'encliquetage (R) peut être activée et désactivée.

6. Procédé selon l'une des revendications 1 à 5, dans lequel un mode de fonctionnement du véhicule automobile est modifié par l'enfoncement de la pédale d'accélérateur (11) par un conducteur au-delà de la position (T_{M}) à laquelle est générée la force opposée avec la valeur de force maximale (F_{M}-F₀).

7. Contrôleur (3) pour commander une pédale d'accélérateur (11) haptique dans un véhicule automobile (1), dans lequel le contrôleur (3) est conçu pour mettre en oeuvre un procédé selon l'une des revendications 1 à 6.

8. Produit de programme informatique, qui présente des instructions lisibles par ordinateur qui ordonnent à un contrôleur (3) programmable de mettre en oeuvre un procédé selon l'une des revendications 1 à 6.

9. Support lisible par ordinateur sur lequel est enregistré un produit de programme informatique selon la revendication 8.
